# EUROPEAN PATENT SPECIFICATION

(11) **EP 3 015 508 B1**
(45) Date of publication and mention of the grant of the patent: **16.08.2023**
(21) Application number: 15187161.3
(22) Date of filing: 28.09.2015
(51) Int. Cl.: C08L 69/00, C08K 5/00, C08L 51/04, C08L 67/02, C08L 51/00, C08K 5/132, C08K 5/3492, C08K 5/3475

(54) **CHEMICAL RESISTANT POLYMER RESIN COMPOSITION FOR VEHICLE OVERHEAD CONSOLE**
CHEMIKALIENBESTÄNDIGE POLYMERHARZZUSAMMENSETZUNG FÜR FAHRZEUGDACHKONSOLE
COMPOSITION DE RÉSINE POLYMÈRE RÉSISTANT AUX PRODUITS CHIMIQUES POUR CONSOLE DE PLAFOND DE VÉHICULE

(30) Priority: 31.10.2014 KR 20140150405
(43) Date of publication of application: 04.05.2016
(73) Proprietor: Hyundai Motor Company, Seoul 06797 (KR); MIKA Inc., Seongnam-si, Gyeonggi-do, 13590 (KR)
(72) Inventor: SOHN, Dong-Cheol, 411-786 Goyang-si, Gyeonggi-do (KR); LEE, Kye Yune, 440-725 Suwon-si, Gyeonggi-do (KR); SHIN, Jong-Wook, 440-722 Suwon-si, Gyeonggi-do (KR); LEE, Han Ki, 000-000 Hwaseong-si, Gyeonggi-do (KR); JANG, Kyeong Hoon, 000-000 Seoul (KR); KIM, Hak Soo, 000-000 Yongin-si, Gyeonggi-do (KR)
(74) Representative: Isarpatent

(56) References cited:
- EP-A1- 2 907 851
- EP-B1- 2 907 851
- WO-A1-2015/194812
- KR-A- 20130 044 867
- US-A1- 2008 119 596
- US-A1- 2014 187 717

## Description

### TECHNICAL FIELD

The present disclosure relates to a chemical resistant polymer resin composition for a vehicle overhead console, which exhibits physical properties of improved heat resistance, impact resistance, maintains excellent appearance characteristics even under exposure to an outdoor environment for a long period of time, and also exhibits improved chemical resistance without chemical cracking upon contact with a car air freshener.

### BACKGROUND

As a vehicle interior material, a polycarbonate/acrylonitrile-styrene-butyl acrylate (PC/ASA) resin is generally used for an overhead console. With the excellent heat resistance, impact resistance, and self-extinguishing property of PC and the processability and economic advantages of ASA, the PC/ASA resin has been developed for overhead consoles that require high heat resistance, impact resistance, and painting properties. In terms of chemical resistance, however, PC/ASA is susceptible to most chemicals, such as aromatic hydrocarbons, ketones, aldehydes, alcohols, and in particular, terpenes (limonene, etc.). When the PC/ASA resin is directly exposed to these chemicals for a long period of time, discoloration, swelling, and cracking occur, thus deteriorating product quality. In addition, PC/ASA resin has safety problems in a head impact zone.

Therefore, many studies have been conducted to prepare a resin composition having superior chemical resistance of the conventional PC/ASA resin. For example, a polyolefin-based resin having excellent chemical resistance has been used in order to improve chemical resistance of PC/ASA. However, in this case, a block copolymer must be used as a compatibilizer in order to improve compatibility of incompatible materials, and phase separation occurs, thus deteriorating mechanical properties.

Further, studies have been conducted on a method of blending an acrylonitrile-butadiene-styrene (ABS) resin with a polyester resin having superior heat resistance, mechanical strength, and elastic strength as an alternative to the PC/ASA resin for the overhead console.

ABS resin has been widely used in electric and electronic products, vehicle components, general goods, due to excellent impact resistance, mechanical strength, surface properties, and processability. However, ABS resin includes a chemically unstable double bond in a rubber component in the resin, such that aging of the rubber component may easily occur when exposed to ultraviolet rays. Thus, ABS resin has poor weather resistance and light resistance. When ABS resin is left outside for a long period of time, discoloration and deterioration of physical properties relatively significantly increase over time, and thus, ABS resin is not suitable for indoor/outdoor materials exposed to sun light.

US 2008/0119596 A1 discloses a thermoplastic composition, a method of manufacture thereof and articles derived therefrom. KR 2013 0044867 A teaches a blend of polyester and polycarbonate.

Accordingly, there exists a need to develop a polymer resin composition for a vehicle overhead console, which has excellent chemical resistance and weather resistance while having the same or better physical properties of heat resistance and impact resistance as the existing PC/ASA resin.

### SUMMARY

The present disclosure provides a chemical resistant resin composition for a vehicle overhead console, which exhibits physical properties of improved heat resistance, impact resistance, maintains excellent appearance characteristics even under exposure to an outdoor environment for a long period of time, and exhibits improved chemical resistance without chemical cracking upon contact with a car air freshener and the like.

An aspect of the present inventive concept provides a chemical resistant resin composition for an overhead console including, based on a total weight of a polyester resin, polycarbonate, and unsaturated nitrile-aromatic vinyl-alkylacrylate graft copolymer, 20 to 40% by weight of the polyester resin containing a residue of a dicarboxylic acid component containing terephthalic acid and a residue of a diol component containing 5 to 60 mol% of isosorbide, 5 to 80 mol% of cyclohexanedimethanol, and a residual amount of other diol compounds; 50 to 70% by weight of polycarbonate; and 10 to 30% weight of an unsaturated nitrile-aromatic vinyl-alkylacrylate graft copolymer; and 0.1 to 10 parts by weight of a weather resistant additive, based on total 100 parts by weight of the polyester resin, polycarbonate, and unsaturated nitrile-aromatic vinyl-alkylacrylate graft copolymer, wherein the weather resistant additive includes one or more selected from the group consisting of a benzotriazol-based compound, a benzophenone-based compound, a benzoxazine-based compound, a malonate-based compound, a triazine-based compound, and a hindered amine light stabilizer (HALS)-based compound.

Hereinafter, the chemical resistant polymer resin composition for the overhead console according to specific embodiments will be described in more detail.

The chemical resistant polymer resin composition for an overhead console includes a polyester resin containing a residue of a dicarboxylic acid component containing terephthalic acid and a residue of a diol component containing 5 to 60 mol% of isosorbide, 5 to 80 mol% of cyclohexanedimethanol, and a residual amount of other diol compounds; polycarbonate; and an unsaturated nitrile-aromatic vinyl-alkylacrylate graft copolymer based on the total weight of the polyester resin, polycarbonate, and unsaturated nitrile-aromatic vinyl-alkylacrylate graft copolymer. The chemical resistant polymer resin composition further includes 0.1 to 10 parts by weight of a weather resistant additive based on 100 parts by weight of the polyester resin, polycarbonate, and unsaturated nitrile-aromatic vinyl-alkylacrylate graft copolymer.

A conventional method of blending a particular polymer resin has been used in order to complement or improve physical properties of a polyester resin. However, there has been a limit in improvement or complementary synergistic effect by blending of the polymer, and it is difficult to obtain sufficient mechanical properties and weather resistance.

Accordingly, a resin composition that exhibits excellent mechanical properties, weather resistance, and chemical resistance to have no chemical cracking upon contact with a car air freshener, has been studied. According to the present disclosure, such a resin composition having excellent chemical resistance together with physical properties such as excellent impact resistance and heat resistance can be obtained by blending a polyester resin having a particular composition with polycarbonate and an unsaturated nitrile-aromatic vinyl-alkylacrylate graft copolymer.

The polymer resin composition according to the present disclosure shows excellent properties in chemical resistance and impact resistance and does not include unstable double bonds. Thereby, the composition has superior mechanical properties and weather resistance even under exposure to UV or heat due to a stable unsaturated nitrile-aromatic vinyl-alkylacrylate graft copolymer.

The polymer resin composition may be prepared using a conventional method for preparing a blend or mixture of polymer resins. However, the preparation method is not limited thereto. For example, a polyester resin, polycarbonate, an unsaturated nitrile-aromatic vinyl-alkylacrylate graft copolymer, and a weather resistant additive may be injected to a general blender, mixer, or tumbler, and then, blended with each other by a twin-screw kneading extruder. In the preparation process of the resin composition, sufficiently dried resins may be used.

In the polymer resin composition according to the invention, the polyester resin includes a residue of a dicarboxylic acid component containing terephthalic acid and a residue of a diol component containing 5 to 60 mol% of isosorbide, 5 to 80 mol% of cyclohexanedimethanol, and a residual amount of other diol compounds.

As used herein, the `overhead console' means a space which is provided on a front ceiling of a vehicle and in which a storage space for sunglasses, glasses, and lighting are installed.

Further, the 'residue' means a moiety or unit, which is contained in the product of a chemical reaction of a specific compound and is derived from the specific compound. For example, each of the 'residue' of the dicarboxylic acid component and 'residue' of the diol component means either a moiety derived from the dicarboxylic acid component or the diol component of polyester formed by esterification or polycondensation.

The `dicarboxylic acid component' means that it includes dicarboxylic acid such as terephthalic acid, an alkyl ester thereof (e.g., a lower alkyl ester having 1 to 4 carbon atoms such as monomethyl, monoethyl, dimethyl, diethyl, or dibutyl ester), and/or an acid anhydride thereof, and may react with the diol component to form a dicarboxylic acid moiety such as terephthaloyl moiety.

The dicarboxylic acid component used in the polyester synthesis contains terephthalic acid, thereby improving physical properties of the polyester resin to be prepared, such as heat resistance, chemical resistance, or weather resistance (e.g., prevention of a reduction in the molecular weight or yellowing due to UV).

Further, the dicarboxylic acid component in the polyester resin may further include one or more selected from the group consisting of aromatic dicarboxylic acids having 8 to 20 carbon atoms and aliphatic dicarboxylic acids having 4 to 20 carbon atoms, in addition to terephthalic acid.

The aromatic dicarboxylic acid component may be aromatic dicarboxylic acid having 8 to 20 carbon atoms, more specifically 8 to 14 carbon atoms, or a mixture thereof. Examples of the aromatic dicarboxylic acid may include isophthalic acid, naphthalene dicarboxylic acid such as 2,6-naphthalene dicarboxylic acid, diphenyl dicarboxylic acid, 4,4'-stilbene dicarboxylic acid, 2,5-furan dicarboxylic acid, 2,5-thiophene dicarboxylic acid, but specific examples of the aromatic dicarboxylic acid are not limited thereto.

The aliphatic dicarboxylic acid component may be aliphatic dicarboxylic acid having 4 to 20 carbon atoms, more specifically 4 to 12 carbon atoms, or a mixture thereof. Examples of the aliphatic dicarboxylic acid may include cyclohexanedicarboxylic acid such as 1,4-cyclohexanedicarboxylic acid or 1,3-cyclohexanedicarboxylic acid, a linear, branched, or cyclic aliphatic dicarboxylic acid component such as phthalic acid, sebacic acid, succinic acid, isodecylsuccinic acid, maleic acid, fumaric acid, adipic acid, glutaric acid, or azelaic acid, but specific examples of the aliphatic dicarboxylic acid are not limited thereto.

The dicarboxylic acid component may include 50 to 100 mol%, preferably 70 to 100 mol% of terephthalic acid; and 0 to 50 mol%, more specifically 0 to 30 mol% of one or more dicarboxylic acids selected from the group consisting of aromatic dicarboxylic acids and aliphatic dicarboxylic acids. If the content of terephthalic acid in the dicarboxylic acid component is too low or high, physical properties of the polyester resin, such as heat resistance, chemical resistance or weather resistance, may be deteriorated.

The diol component used in the polyester synthesis may include 5 to 60 mol% of isosorbide, 5 to 80 mol% of cyclohexane dimethanol, and a residual amount of other diol compounds.

The diol component contains isosorbide (1,4:3,6-dianhydroglucitol), thereby improving physical properties of chemical resistance as well as heat resistance of the polyester resin to be prepared. As the content of cyclohexanedimethanol (e.g., 1,2-cyclohexanedimethanol, 1,3-cyclohexanedimethanol or 1,4-cyclohexanedimethanol) increases in the diol component, impact resistance of the polyester resin to be prepared may be greatly increased.

In particular, the diol component of the polyester resin may include 5 to 60 mol% of isosorbide, and if the content of isosorbide in the diol component is less than 5 mol%, heat resistance or chemical resistance of the polyester resin to be prepared will be insufficient, and melting viscosity property of the polyester resin may not be obtained. Further, if the content of isosorbide is more than 60 mol%, appearance of the polyester resin or product may be deteriorated or yellowing may occur.

The diol component may further include other diol component, in addition to isosorbide and cyclohexanedimethanol. The 'other diol component' means a diol component excluding isosorbide and cyclohexanedimethanol, and for example, it may be aliphatic diol, aromatic diol, or a mixture thereof.

In the polyester copolymer, the diol component may further include one or more selected from the group consisting of compounds represented by Chemical Formulae 1, 2, and 3. 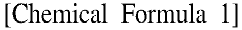 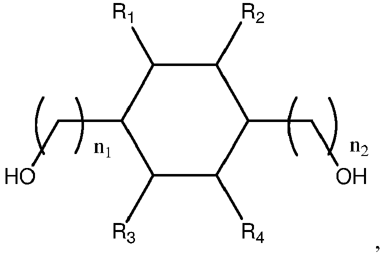
where R₁, R₂, R₃ and R₄ are each independently hydrogen or a substituted or unsubstituted alkyl group having 1 to 5 carbon atoms, and n₁ and n₂ are each independently an integer of 0 to 3; 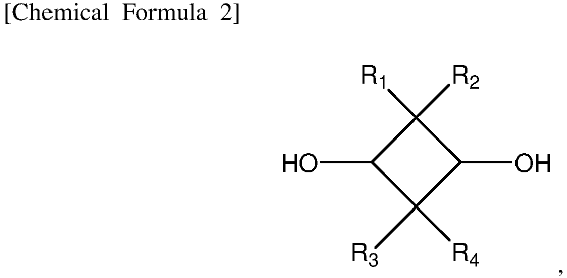
where R₁, R₂, R₃ and R₄ are each independently hydrogen or a substituted or unsubstituted alkyl group having 1 to 5 carbon atoms. 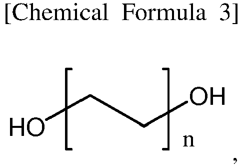
where n is an integer of 1 to 7.

Further, the polyester resin may have a weight average molecular weight of 10,000 to 100,000 and a glass transition temperature of 0 to 200°C.

The polyester resin may be prepared by esterified a diol component containing 5 to 60 mol% of isosorbide, 5 to 80 mol% of cyclohexanedimethanol, and a residual amount of other diol compound with a dicarboxylic acid component containing terephthalic acid, by adding a phosphorus-based stabilizer at the time when the degree of esterification reaches at least 80%, and by subjecting the esterification product to polycondensation.

In preparing the polyester resin, a catalyst including a zinc compound is used for the esterification reaction, a phosphorus-based stabilizer is added to the reaction solution at the end of the esterification reaction, for example, when the degree of esterification reaches at least 80%, and the resulting esterification product is subjected to polycondensation, thereby providing a polyester resin that exhibits physical properties of high heat resistance, flame retardancy, and impact resistance, and has excellent appearance property, high transparency, and excellent molding property.

Detailed descriptions of the dicarboxylic acid component containing terephthalic acid, cyclohexanedimethanol, isosorbide, and other diol compound are the same as described above.

Specific examples of the zinc-based catalyst may include zinc acetate, zinc acetate dehydrate, or a mixture thereof, and specific examples of the phosphorus-based stabilizer may include phosphoric acid, trimethyl phosphate, triethyl phosphate, triphenyl phosphate, triethyl phosphonoacetate, or a mixture of two or more thereof.

The esterification reaction between the dicarboxylic acid components and the diol components may be carried out at a pressure of 0 to 10.0 kg/cm² and a temperature of 150 to 300°C. The esterification reaction conditions may be appropriately varied depending on specific characteristics of the final polyester, the molar ratio between the dicarboxylic acid components and glycol, or processing conditions. Exemplary conditions for the esterification reaction include a pressure of 0 to 5.0 kg/cm². In certain embodiments, the esterification reaction is performed at 0.1 to 3.0 kg/cm² and a temperature of 200 to 270°C. In certain embodiments, the esterification reaction is carried out at 240 to 260°C.

The esterification reaction may be carried out in a batch or continuous manner. The respective raw materials may be separately added, but they may be added in the form of slurry by mixing the diol components with the dicarboxylic acid components. The slurry may be prepared by dissolving the diol components in the form of a solid at room temperature in water or ethylene glycol, and then the solution is mixed with the dicarboxylic acid components containing terephthalic acid. Alternatively, the slurry may be prepared by melting isosorbide at 60°C or higher, and then the molten isosorbide is mixed with the dicarboxylic acid components containing terephthalic acid and other diol components. Water may be further added to the slurry of the dicarboxylic acid components and the copolymerized diol components of isosorbide and ethylene glycol, thereby enhancing the flowability of the slurry.

The molar ratio between the dicarboxylic acid components and the diol components participating in the esterification reaction may be 1:1.05 to 1:3.0. If the molar ratio of dicarboxylic acid component:diol component is less than 1:1.05, the dicarboxylic acid components may remain unreacted after polymerization, causing poor transparency of the resin. On the contrary, if the molar ratio exceeds 1:3.0, the polymerization rate may be lowered or the productivity of the resin may be deteriorated.

Polycondensation reaction step of the esterification products may include a step of reacting the esterification products of the dicarboxylic acid component and the diol component at a temperature of 150 to 300°C and a reduced pressure of 600 to 0.01 mmHg for 1 to 24 hours.

The polycondensation reaction may be carried out at a temperature of 150 to 300°C, more specifically 200 to 290°C or 260 to 280°C, and a reduced pressure of 600 to 0.01 mmHg, more specifically 200 to 0.05 mmHg or 100 to 0.1 mmHg. The reduced pressure condition of the polycondensation reaction enables the removal of glycol, which is a by-product of the polycondensation reaction. If the polycondensation reaction is carried out outside the reduced pressure range of 400 to 0.01 mmHg, removal of the by-product may be insufficient.

If the polycondensation reaction is carried out outside the temperature range of 150 to 300°C, that is, if the polycondensation reaction is carried out at a temperature of 150°C or lower, glycol which is a by-product of the polycondensation reaction cannot be effectively removed from the system, and as a result, intrinsic viscosity of the final reaction product may be lowered, which deteriorates the physical properties of the polyester resin, and if the reaction is carried out at a temperature of 300°C or higher, there is a high possibility that yellowing may occur on appearance of the polyester resin. The polycondensation reaction may be carried out for a time necessary for the intrinsic viscosity of a final reaction product to reach an appropriate level, for example, for an average retention time of 1 to 24 hours.

Meanwhile, the method of preparing the polyester resin composition may further include a step of adding a polycondensation catalyst. The polycondensation catalyst may be added to the esterification or transesterification reaction product before initiation of the polycondensation reaction. Alternatively, the polycondensation catalyst may be added to a slurry mixture containing the diol components and the dicarboxylic acid components before or during the esterification reaction.

As the polycondensation catalyst, a titanium compound, a germanium compound, an antimony compound, an aluminum compound, a tin compound, or a mixture thereof may be used.

The titanium compound may be exemplified by tetraethyl titanate, acetyltripropyl titanate, tetrapropyl titanate, tetrabutyl titanate, polybutyl titanate, 2-ethylhexyl titanate, octhylene glycol titanate, lactate titanate, triethanolamine titanate, acetylacetonate titanate, ethylacetoaceticester titanate, isostearyl titanate, titanium dioxide, a titanium dioxide/silicon dioxide copolymer, and a titanium dioxide/zirconium dioxide copolymer.

The germanium compound may be exemplified by germanium dioxide (GeO₂), germanium tetrachloride (GeCl₄), germanium ethyleneglycoxide, germanium acetate, copolymers thereof, and mixtures thereof. In certain embodiments, germanium dioxide is used. The germanium dioxide may be in a crystalline or amorphous form. Glycol soluble germanium dioxide may be also used.

The chemical resistant resin composition for a vehicle overhead console of an embodiment may include a polycarbonate resin described below, in addition to the polyester resin having the above particular composition and the unsaturated nitrile-aromatic vinyl-alkylacrylate graft copolymer. Therefore, the chemical resistant resin composition for an overhead console includes a particular amount of polycarbonate having excellent mechanical properties, thereby having mechanical properties of improved impact strength, tensile strength, and elongation, and showing excellent heat resistance.

As the polycarbonate-based polymer, various polycarbonate-based polymers prepared by using bisphenol-A as a basic component may be used. Specifically, considering properties of the resin molded product to be prepared, polycarbonates having different molecular weights and physical properties may be used without particular limitation, and for example, polycarbonate having a weight average molecular weight of 10,000 to 100,000 may be used.

The chemical resistant polymer resin composition for an overhead console according to an embodiment includes an unsaturated nitrile-aromatic vinyl-alkylacrylate graft copolymer, in addition to the polyester resin having the above particular composition and the polycarbonate. Unlike an ABS resin, the unsaturated nitrile-aromatic vinyl-alkylacrylate graft copolymer does not include a butadiene-based rubber having a double bond. Thus, discoloration or deterioration of physical properties due to oxygen or ozone in air or UV does not occur, thereby improving weather resistance, light resistance, chemical resistance, and heat resistance. Accordingly, the unsaturated nitrile-aromatic vinyl-alkylacrylate graft copolymer is used in outdoor exterior materials frequently exposed to sun light, such as outdoor electric or electronic products, automobile components, or building materials.

The unsaturated nitrile-aromatic vinyl-alkylacrylate graft copolymer may be a core-shell rubber, in which alkylacrylate is preferably used in the core to improve impact resistance, and unsaturated nitrile and aromatic vinyl may be used in the shell to improve adhesion and dispersion properties to the matrix resin. In particular, the core-shell rubber may have an average particle size of 0.01 to 5 µm and a graft ratio of 5 to 90%, and the core may have a glass transition temperature of -20°C or lower, and the shell may have a glass transition temperature of 20°C or higher.

In the unsaturated nitrile-aromatic vinyl-alkylacrylate graft copolymer, the unsaturated nitrile may provide chemical resistance and gloss characteristics, and the unsaturated nitrile may be one or more selected from the group consisting of acrylonitrile, methacrylonitrile, ethacrylonitrile, phenylacrylonitrile, α-chloroacrylonitrile, and chloroacrylonitrile.

In particular, among the unsaturated nitriles, acrylonitrile may be used to provide superior chemical resistance, high gloss characteristics, and high stiffness.

The unsaturated nitrile-aromatic vinyl-alkylacrylate graft copolymer contains aromatic vinyl, thereby having superior processability and moldability. The aromatic vinyl may be one or more selected from the group consisting of styrene, α-methyl styrene vinyltoluene, t-butyl styrene, halogen-substituted styrene, 1,3-dimethyl styrene, 2,4-dimethyl styrene, and ethyl styrene.

The unsaturated nitrile-aromatic vinyl-alkylacrylate graft copolymer contains alkylacrylate, and a dissociation energy of hydrogen atoms in main chains of the acrylate is about 90 kcal/mol, and thus, it is dissociated only by high energy light with a wavelength of 300 nm or lower. Such high energy light is not available in sunlight, and thus the unsaturated nitrile-aromatic vinyl-alkylacrylate graft copolymer is not degraded by sunlight and UV. Accordingly, weather resistance that is known as the greatest drawback of the conventional ABS resins may be remarkably improved, thereby minimizing deterioration of mechanical properties or change of appearance of the resin even though used outside for a long time.

The alkylacrylate may include one or more selected from the group consisting of methyl acrylate, ethyl acrylate, propyl acrylate, and butyl acrylate. In particular, when butyl acrylate is used, the resin composition of an embodiment has a lower glass transition temperature due to flexibility of the butyl group, thereby showing superior impact resistance.

In the resin composition of an embodiment, the unsaturated nitrile-aromatic vinyl-alkylacrylate graft copolymer may be acrylonitrile-styrene-butyl acrylate (ASA). As described above, since the acrylonitrile-styrene-butyl acrylate may not include a butadiene rubber having double bonds in main chains, it has molding processability, chemical resistance, and impact resistance that are equivalent to or better than those of ABS resins. In addition, since discoloration or deterioration of physical properties due to oxygen or ozone in air or UV does not occur, it exhibits superior mechanical properties and weather resistance in outdoor.

The resin composition of an embodiment includes the polyester resin; polycarbonate; and unsaturated nitrile-aromatic vinyl-alkylacrylate graft copolymer in an amount of about 20 to 40% by weight; 50 to 70% by weight; and 10 to 30% by weight, respectively. In the resin composition, if the content of the polyester resin is too high, production costs increase and fluidity decreases to reduce processability. If the content of the unsaturated nitrile-aromatic vinyl-alkylacrylate graft copolymer is too high, the processability may decrease. Therefore, to secure superior mechanical properties and weather resistance, the polyester resin and the unsaturated nitrile-aromatic vinyl-alkylacrylate graft copolymer are included.

The resin composition of an embodiment may have ΔE of 1.0 or less, more specifically 0.5 or less, which is measured using an accelerated weathering tester in accordance with ASTM D 4587-05. ΔE value is an index of weather resistance. If ΔE is 1.0 or less, discoloration of the appearance less occurs even when exposed to outside for a long period of time, and initial physical properties are maintained without great changes in mechanical properties, which shows superior weather resistance. On the contrary, if ΔE has a high value, appearance is deteriorated when exposed to the outside for a long period of time. In addition, the mechanical properties are also reduced, and therefore, it is not suitable for long-term outdoor use.

The chemical resistant polymer resin composition for an overhead console of an embodiment further includes 0.1 to 10 parts by weight of a weather resistant additive, based on total 100 parts by weight of the polyester resin, polycarbonate, and unsaturated nitrile-aromatic vinyl-alkylacrylate graft copolymer. The weather resistant additive is a compound having a characteristic of absorbing UV in UVA, UVB, and UVC regions, and provides a weather resistant property for the polymer resin composition containing the same.

Specifically, the weather resistant additive includes one or more selected from the group consisting of a benzophenone-based compound, a benzotriazole-based compound, a benzoxazine-based compound, a malonate-based compound, a triazine-based compound, and a hindered amine light stabilizers (HALS)-based compound. For example, benzophenone, 2-(2H-benzotriazol-2-yl)-p-cresol, 2,2'-methylene-bis(6-(2H-benzotriazol-2-yl)-4-(1,1,3,3-tetramethylbutyl))phenol, 2,2'-(1,4-phenylene)-bis-(4H-3, 1-benzoxazin-4-one), tetra-ethyl-2,2'-(1,4-phenylenedimethylidene)-bismalonate, 2-(H-benzotriazol-2-yl)-4,6-bis(1-methyl-1-phenylethyl)phenol, 2-hydroxyphenyl-s-triazine derivative, 2-(4,6-diphenyl-1,3,5-triazin-2-yl)-5-hexyloxyphenol, or alkoxyamine hindered amine stabilizer may be used.

The chemical resistant polymer resin composition for the overhead console may further include one or more selected from the group consisting of an unsaturated nitrile-aromatic vinyl-glycidyl methacrylate-based compatibilizer, an unsaturated nitrile-aromatic vinyl-maleic anhydride-based compatibilizer, a saturated ethylene-alkylacrylate-glycidyl methacrylate-based compatibilizer, and a carbodiimide-based anti-hydrolysis agent.

In this regard, the unsaturated nitrile-aromatic vinyl-glycidyl methacrylate-based compatibilizer may be included in an amount of 15 parts by weight or less, the unsaturated nitrile-aromatic vinyl-maleic anhydride-based compatibilizer in an amount of 15 parts by weight or less, the saturated ethylene-alkylacrylate-glycidyl methacrylate-based compatibilizer in an amount of 15 parts by weight or less, or the carbodiimide-based anti-hydrolysis agent in an amount of 10 parts by weight or less, based on total 100 parts by weight of polyester resin, polycarbonate and unsaturated nitrile-aromatic vinyl-alkylacrylate graft copolymer.

The alkylacrylate may be one or more selected from the group consisting of methyl acrylate, ethyl acrylate, propyl acrylate, isopropyl acrylate, butyl acrylate, hexylacrylate, octyl acrylate, and 2-ethylhexylacrylate.

Further, the unsaturated nitrile-aromatic vinyl-glycidyl methacrylate-based compatibilizer may have a glass transition temperature of 20 to 200°C and a weight average molecular weight of 200 to 300,000, and optionally, it may be replaced by aromatic vinyl-glycidyl methacrylate.

In this regard, the unsaturated nitrile-aromatic vinyl-maleic anhydride-based compatibilizer may have a glass transition temperature of 20 to 200°C and a weight average molecular weight of 200 to 300,000, and the saturated ethylene-alkylacrylate-glycidyl methacrylate-based compatibilizer may have a glass transition temperature of -150 to 200°C and a weight average molecular weight of 200 to 300,000.

Further, the carbodiimide-based anti-hydrolysis agent may have a weight average molecular weight of 50 to 300,000 and may be represented by the following Chemical Formula 4 or Chemical Formula 5:

[Chemical Formula 4] R₁-N=C=N-R₂

wherein R₁ and R₂ are each independently a hydrogen atom, an alkyl group having 1 to 20 carbon atoms or an aryl group having 6 to 36 carbon atoms; 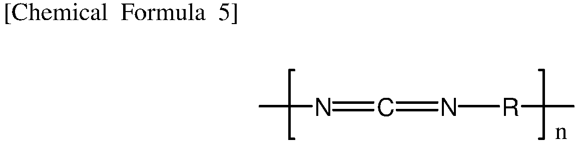
wherein R is an alkyl group having 1 to 20 carbon atoms or an aryl group having 6 to 36 carbon atoms, and n is an integer of 2 to 30,000 and represents an average degree of polymerization.

Further, the chemical resistant resin composition for overhead console of an embodiment may further include an additive selected from the group consisting of a dye, a pigment, an impact modifier, a filler, a stabilizer, a lubricant, an antioxidant, an antimicrobial, a release agent, and mixtures thereof.

As the antioxidant, for example, a phenolic primary antioxidant, a phosphite-based secondary antioxidant, a thioester-based antioxidant may be used. In this regard, the phenolic primary antioxidant may have a weight average molecular weight of 50 to 300,000, the phosphite-based antioxidant may be, for example, selected from the group consisting of the following Chemical Formulae 6 to 8, and the thioester-based antioxidant may be a compound represented by the following Chemical Formula 9 or Chemical Formula 10: 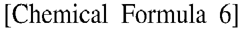 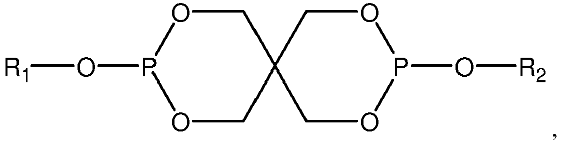
where R₁ and R₂ are each independently a substituted or unsubstituted alkyl group having 1 to 40 carbon atoms or a substituted or unsubstituted aryl group having 6 to 40 carbon atoms; 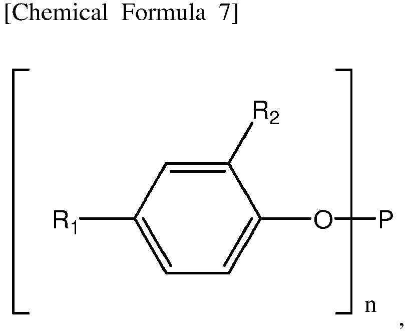
where R₁ and R₂ are each independently a substituted or unsubstituted alkyl group having 1 to 40 carbon atoms or a substituted or unsubstituted aryl group having 6 to 40 carbon atoms, and n is an integer of 1 or more and represents a substituted repeating unit; 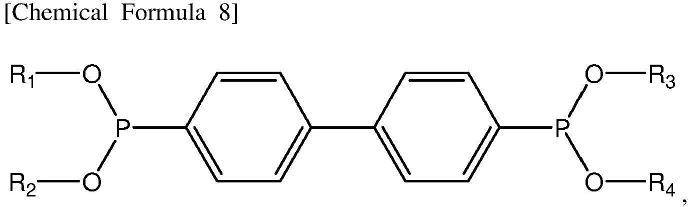
where R₁, R₂, R₃ and R₄ are each independently a substituted or unsubstituted alkyl group having 1 to 40 carbon atoms or a substituted or unsubstituted aryl group having 6 to 40 carbon atoms; 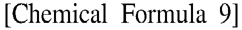 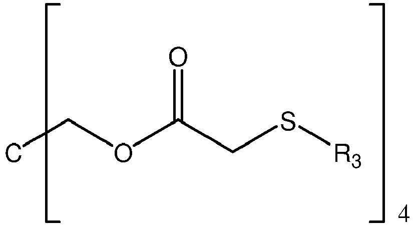 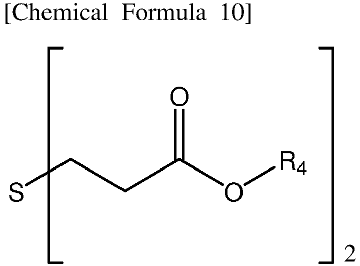
where R₃ and R₄ are each independently a substituted or unsubstituted alkyl group having 1 to 40 carbon atoms or a substituted or unsubstituted aryl group having 6 to 40 carbon atoms.

Further, the lubricant may be one or more selected from the group consisting of a metallic stearate-based lubricant, an amide-based lubricant, a paraffin-based lubricant, and an ester-based lubricant.

According to the present disclosure, provided is a chemical resistant polymer resin composition for overhead console, which exhibits physical properties of improved heat resistance, impact resistance, maintains excellent appearance characteristics even though exposed to an outdoor environment for a long period of time, and also exhibits improved chemical resistance without chemical cracking upon contact with a car air freshener.

### DETAILED DESCRIPTION OF THE EMBODIMENTS

Hereinafter, the present disclosure will be explained in more detail in the following Examples. However, these Examples are provided for illustrative purposes and are not intended to limit the scope of the present disclosure.

### <Examples and Comparative Examples>

### Preparation of resin composition

### Example 1

3% by weight of acrylonitrile-styrene-glycidyl methacrylate, 1.0% by weight of a benzotriazol-based weather resistant additive, 0.2% by weight of a phenolic primary antioxidant, and 0.2% by weight of a phosphite-based secondary antioxidant were added, based on 100% by weight of a resin consisting of 40% by weight of terephthalic acid-isosorbide-1,4-cyclohexanediol-ethylene glycol copolymer polyester (Tg : 110°C, weight average molecular weight: 50000), 50% by weight of polycarbonate, and 10% by weight of acrylonitrile-styrene-butyl acrylate graft copolymer, and kneading extrusion was uniformly carried out using a twin-screw kneading extruder (Φ: 40mm, LID = 44) so as to prepare a pellet.

In this regard, the terephthalic acid-isosorbide-1,4-cyclohexanediol-ethylene glycol copolymer polyester was an environmentally friendly resin having high impact resistance, ECOZEN available from SK Chemicals (Korea), the polycarbonate was 3025PJ available from Samyang Corp. (Korea), the acrylonitrile-styrene-butyl acrylate graft copolymer was a core-shell rubber-type graft ASA, VLE available from Styrolution (German), the acrylonitrile-styrene-glycidyl methacrylate was SAG-005 available from SUNNY FC (China), the benzotriazol-based weather resistant additive was Tinuvin 234 available from BASF (German), the phenolic primary antioxidant was AO-60 available from ADEKA Corp. (Japan), and the phosphite-based secondary antioxidant was S-9228 available from DOVER Chemical Corp (USA).

### Example 2

3% by weight of acrylonitrile-styrene-glycidyl methacrylate, 1.0% by weight of a benzotriazol-based weather resistant additive, 0.2% by weight of a phenolic primary antioxidant, and 0.2% by weight of a phosphite-based secondary antioxidant were added, based on 100% by weight of a resin consisting of 30% by weight of terephthalic acid-isosorbide-1,4-cyclohexanediol-ethylene glycol copolymer polyester (Tg : 110°C, weight average molecular weight: 50000), 60% by weight of polycarbonate, and 10% by weight of acrylonitrile-styrene-butyl acrylate graft copolymer, and kneading extrusion was uniformly carried out using a twin-screw kneading extruder (Φ: 40mm, LID = 44) so as to prepare a pellet.

In this regard, the terephthalic acid-isosorbide-1,4-cyclohexanediol-ethylene glycol copolymer polyester was an environmentally friendly resin having high impact resistance, ECOZEN available from SK Chemicals (Korea), the polycarbonate was 3022PJ available from Samyang Corp. (Korea), the acrylonitrile-styrene-butyl acrylate graft copolymer was a core-shell rubber-type graft ASA, VLE available from Styrolution (German), the acrylonitrile-styrene-glycidyl methacrylate was SAG-005 available from SUNNY FC (China), the benzotriazol-based weather resistant additive was Tinuvin 360 available from BASF (German), the phenolic primary antioxidant was AO-60 available from ADEKA Corp. (Japan), and the phosphite-based secondary antioxidant was S-9228 available from DOVER Chemical Corp (USA).

### Example 3

3% by weight of acrylonitrile-styrene-glycidyl methacrylate, 1.0% by weight of a triazine-based weather resistant additive, 0.2% by weight of a phenolic primary antioxidant, and 0.2% by weight of a phosphite-based secondary antioxidant were added, based on 100% by weight of a resin consisting of 20% by weight of terephthalic acid-isosorbide-1,4-cyclohexanediol-ethylene glycol copolymer polyester (Tg : 110°C, weight average molecular weight : 50000), 60% by weight of polycarbonate, and 20% by weight of acrylonitrile-styrene-butyl acrylate graft copolymer, and kneading extrusion was uniformly carried out using a twin-screw kneading extruder (Φ: 40mm, LID = 44) so as to prepare a pellet.

In this regard, the terephthalic acid-isosorbide-1,4-cyclohexanediol-ethylene glycol copolymer polyester was an environmentally friendly resin having high impact resistance, ECOZEN available from SK Chemicals (Korea), the polycarbonate was 3025PJ available from Samyang Corp. (Korea), the acrylonitrile-styrene-butyl acrylate graft copolymer was a core-shell rubber-type graft ASA, VLE available from Styrolution (German), the acrylonitrile-styrene-glycidyl methacrylate was SAG-005 available from SUNNY FC (China), the triazine-based weather resistant additive was Tinuvin 1577 available from BASF (German), the phenolic primary antioxidant was AO-60 available from ADEKA Corp. (Japan), and the phosphite-based secondary antioxidant was Irgafos 168 available from Clariant (Switzerland).

### Comparative Example 1

A polymer resin composition was prepared in the same manner as in Example 1, except that 10% by weight of acrylonitrile-butadiene-styrene resin (Kumho Petrochemical Co., HR-181) was used instead of 10% by weight of acrylonitrile-styrene-butyl acrylate graft copolymer.

### Comparative Example 2

A polymer resin composition was prepared in the same manner as in Example 5, except that the terephthalic acid-isosorbide-1,4-cyclohexanediol-ethylene glycol copolymer polyester was not used, 50% by weight of polycarbonate resin (Samyang Corp. (Korea), 3022PJ), 20% by weight of acrylonitrile-styrene-butyl acrylate graft copolymer (Styrolution (German), VLE), and 30% by weight of acrylonitrile-styrene copolymer (Kumho Petrochemical Co. (Korea), SAN-326) were used.

### Comparative Example 3

0.6% by weight of a mixture (Clariant PR-31) of a benzotriazole-based compound and a hindered amine light stabilizer (HALS)-based compound was added, based on 100% by weight of acrylonitrile-butadiene-styrene copolymer (ABS; Kumho Petrochemical Co. (Korea), HR-181) and acrylonitrile-styrene copolymer (Kumho Petrochemical Co. (Korea), SAN-326), and kneading extrusion was uniformly carried out so as to prepare a pellet.

### <Experimental Example: Test of physical properties of molded articles manufactured from polymer resin composition>

The pellets prepared according to Examples 1 to 3 and Comparative Examples 1 to 3 were injected using an injection machine at a barrel temperature of 250°C under the same conditions, and then the injected test samples were adjusted under conditions of 23±2°C and a relative humidity of 50±5%. Their mechanical properties were measured as follows. The test results are given in the following Tables 1.

### Experimental Example 1: Test of impact strength

In accordance with ASTM D 256, test samples were prepared, and their impact strength was measured using an Izod impact tester (Toyoseiki).

### Experimental Example 2: Test of tensile property

In accordance with ASTM D 638, test samples were prepared, and their tensile strength and elongation were measured using a universal testing machine (Zwick Roell Z010).

### Experimental Example 3: Test of flexural property

In accordance with ASTM D 790, test samples were prepared, and their flexural strength and flexural modulus were measured using a universal testing machine (Zwick Roell Z010).

### Experimental Example 4: Test of heat resistance

In accordance with ASTM D 648, test samples were prepared, and their heat resistance was measured using a heat resistance tester (HDT Tester, Toyoseiki).

### Experimental Example 5: Test of weather resistance

In accordance with ASTM D 4587-05, test samples were prepared, and an accelerated weathering tester (Q-LAB) was used to measure Delta E, which was compared to those of test samples before experiment.

### Experimental Example 6: Test of chemical resistance

The pellets prepared according to Examples 1 to 3 and Comparative Examples 1 to 2 were injected using an injection machine at a barrel temperature of 250°C under the same conditions, and then the injected tensile strength samples were adjusted under conditions of 23±2°C and a relative humidity of 50±5% for 24 hours. Evaluation was performed in accordance with the following method.
① An experimental fixture for a chemical resistance test was manufactured to have a strain of 1.5%, and a tensile test sample was fixed in the experimental fixture.
② An air freshener was applied to the tensile test sample for 1 minute, and then left at 23±2°C for 72 hr.
③ After 72 hr at 23±2°C, the tensile test sample was removed from the experimental fixture, and then left at 23±2°C for about 1-2 hr.
④ After left for about 1-2 hr as above, the surface of the tensile test sample, to which the air freshener had been applied, was observed under an optical microscope to measure crack width, and chemical resistance was evaluated by presence/absence of cracking or breakage.

**[Table 1]**

| Section | Izod impact strength(1/8") | Izod impact strength(1/4") | Tensile strength | Elongation | Heat resistance (1.82MPa) | ΔE | Chemical resistance |
|---|---|---|---|---|---|---|---|
| | J/m | J/m | kg/cm² | % | °C | | |
| Example 1 | 800 | 300 | 550 | 70 | 110 | 0.3 ↓ | absence |
| Example 2 | 750 | 350 | 570 | 80 | 113 | 0.3 ↓ | absence |
| Example 3 | 700 | 400 | 580 | 85 | 111 | 0.3 ↓ | absence |
| Comparative Example 1 | 250 | 150 | 450 | 125 | 92 | 1.5 | absence |
| Comparative Example 2 | 550 | 420 | 520 | 110 | 105 | 0.7 | presence |

As shown in the above measurement results, the polymer resin compositions of Examples showed excellent heat resistance, impact resistance, and tensile properties, compared to those of Comparative Examples. In particular, these polymer resin compositions exhibit excellent mechanical properties and also high resistance to changes in outdoor environments such as heat, UV, air, and excellent chemical resistance to household chemicals such as various cleaners, car air fresheners, thereby being widely used in automobile interior materials, electronic products, in particular, as materials for overhead console.

## Claims

1. A chemical resistant polymer resin composition for an overhead console, the composition comprising:
20 to 40% by weight of a polyester resin including a residue of a dicarboxylic acid component containing terephthalic acid and a residue of a diol component containing 5 to 60 mol% of isosorbide, 5 to 80 mol% of cyclohexanedimethanol, and a residual amount of other diol compounds;
50 to 70% by weight of a polycarbonate; and
10 to 30% by weight of an unsaturated nitrile-aromatic vinyl-alkylacrylate graft copolymer, based on the total weight of the polyester resin, polycarbonate, and unsaturated nitrile-aromatic vinyl-alkylacrylate graft copolymer; and
0.1 to 10 parts by weight of a weather resistant additive, based on 100 parts by weight of the polyester resin, polycarbonate, and unsaturated nitrile-aromatic vinyl-alkylacrylate graft copolymer,
wherein the weather resistant additive includes one or more selected from the group consisting of a benzotriazol-based compound, a benzophenone-based compound, a benzoxazine-based compound, a malonate-based compound, a triazine-based compound, and a hindered amine light stabilizer (HALS)-based compound.

2. The chemical resistant polymer resin composition of claim 1 having an index of weather resistance ΔE of 1.0 or less, which is measured using an accelerated weathering tester in accordance with ASTM D 4587-05.

3. The chemical resistant polymer resin composition of claim 1, wherein in the polyester resin, the dicarboxylic acid component further includes one or more selected from the group consisting of aromatic dicarboxylic acids having 8 to 20 carbon atoms and aliphatic dicarboxylic acids having 4 to 20 carbon atoms.

4. The chemical resistant polymer resin composition of claim 1, wherein in the polyester resin, the diol component further includes one or more selected from the group consisting of compounds represented by Chemical Formulae 1, 2, and 3: 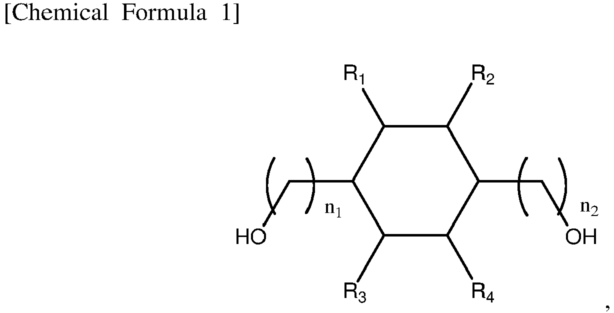
wherein R₁, R₂, R₃, and R₄ are each independently hydrogen or a substituted or unsubstituted alkyl group having 1 to 5 carbon atoms, and n₁ and n₂ are each independently an integer of 0 to 3; 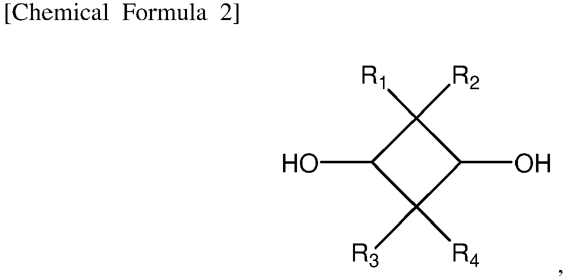
wherein R₁, R₂, R₃, and R₄ are each independently hydrogen or a substituted or unsubstituted alkyl group having 1 to 5 carbon atoms; 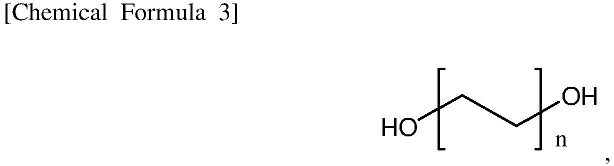
wherein n is an integer of 1 to 7.

5. The chemical resistant polymer resin composition of claim 1, wherein the unsaturated nitrile is selected from the group consisting of acrylonitrile, methacrylonitrile, ethacrylonitrile, phenylacrylonitrile, α-chloroacrylonitrile, and chloroacrylonitrile.

6. The chemical resistant polymer resin composition of claim 1, wherein the aromatic vinyl is selected from the group consisting of styrene, α-methyl styrene vinyltoluene, t-butyl styrene, halogen-substituted styrene, 1,3-dimethyl styrene, 2,4-dimethyl styrene, and ethyl styrene.

7. The chemical resistant polymer resin composition of claim 1, wherein the alkylacrylate is selected from the group consisting of methyl acrylate, ethyl acrylate, propyl acrylate, and butyl acrylate.

8. The chemical resistant polymer resin composition of claim 1, wherein the unsaturated nitrile-aromatic vinyl-alkylacrylate graft copolymer includes acrylonitrile-styrene-butyl acrylate.

9. The chemical resistant polymer resin composition of claim 1, further comprising one or more additives selected from the group consisting of an unsaturated nitrile-aromatic vinyl-glycidyl methacrylate-based compatibilizer, an unsaturated nitrile-aromatic vinyl-maleic anhydride-based compatibilizer, a saturated ethylene-alkylacrylate-glycidyl methacrylate-based compatibilizer, and a carbodiimide-based anti-hydrolysis agent.

10. The chemical resistant polymer resin composition of claim 1, further comprising one or more additives selected from the group consisting of a dye, a pigment, an impact modifier, a filler, a stabilizer, a lubricant, an antioxidant, an antimicrobial, a mold release agent, and mixtures thereof.

## Patentansprüche

1. Chemikalienbeständige Polymerharzzusammensetzung für eine Dachkonsole, wobei die Zusammensetzung umfasst:
20 bis 40 Gewichts-% eines Polyesterharzes, das einen Rest eines Dicarbonsäurebestandteils, der Terephthalsäure enthält, und einen Rest eines Diolbestandteils aufweist, der 5 bis 60 Mol-% Isosorbid, 5 bis 80 Mol-% Cyclohexandimethanol und eine Restmenge anderer Diolverbindungen enthält;
50 bis 70 Gewichts-% eines Polycarbonats; und
10 bis 30 Gewichts-% eines Pfropfcopolymers aus ungesättigtem Nitril, aromatischem Vinyl und Alkylacrylat, auf Basis des Gesamtgewichts aus dem Polyesterharz, Polycarbonat und dem Pfropfcopolymer aus ungesättigtem Nitril, aromatischem Vinyl und Alkylacrylat; und
0,1 bis 10 Gewichtsteile eines witterungsbeständigen Additivs, auf Basis von 100 Gewichtsteilen des Polyesterharzes, Polycarbonats und des Pfropfcopolymers aus ungesättigtem Nitril, aromatischem Vinyl und Alkylacrylat,
wobei das witterungsbeständige Additiv ein oder mehrere Elemente aufweist, die ausgewählt sind aus der Gruppe bestehend aus einer Verbindung auf Basis von Benzotriazol, einer Verbindung auf Basis von Benzophenon, einer Verbindung auf Basis von Benzoxazin, einer Verbindung auf Basis von Malonat, einer Verbindung auf Basis von Triazin und einer Verbindung auf Basis von sterisch gehinderten Aminen als Lichtschutzmitteln (hindered amine light stabilizer, HALS).

2. Chemikalienbeständige Polymerharzzusammensetzung nach Anspruch 1 mit einem Witterungsbeständigkeitsindex ΔE von maximal 1,0, der unter Verwendung eines Testvorrichtung für die beschleunigte Bewitterung nach ASTM D 4587-05 gemessen wird.

3. Chemikalienbeständige Polymerharzzusammensetzung nach Anspruch 1, wobei in dem Polyesterharz der Dicarbonsäurebestandteil ferner ein oder mehrere Elemente aufweist, die ausgewählt sind aus der Gruppe aus aromatischen Dicarbonsäuren mit 8 bis 20 Kohlenstoffatomen und aliphatischen Dicarbonsäuren mit 4 bis 20 Kohlenstoffatomen.

4. Chemikalienbeständige Polymerharzzusammensetzung nach Anspruch 1, wobei in dem Polyesterharz der Diolbestandteil ferner ein oder mehrere Elemente aufweist, die ausgewählt sind aus der Gruppe bestehend aus Verbindungen, die mit der chemischen Formel 1, 2 und 3 dargestellt werden: 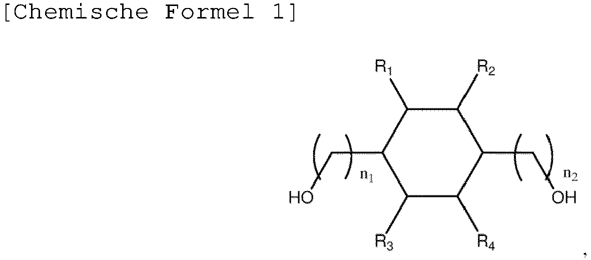
in der R₁, R₂, R₃ und R₄ jeweils unabhängig Wasserstoff oder eine substituierte oder unsubstituierte Alkylgruppe mit 1 bis 5 Kohlenstoffatomen sind und n₁ und n₂ jeweils unabhängig eine ganze Zahl von 0 bis 3 sind; 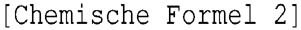 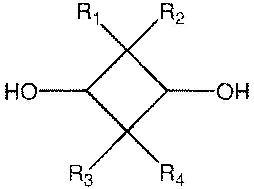
in der R₁, R₂, R₃ und R₄ jeweils unabhängig Wasserstoff oder eine substituierte oder unsubstituierte Alkylgruppe mit 1 bis 5 Kohlenstoffatomen sind; 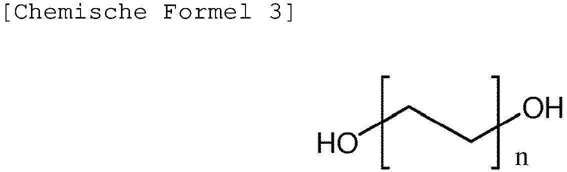
in der n eine ganze Zahl von 1 bis 7 ist.

5. Chemikalienbeständige Polymerharzzusammensetzung nach Anspruch 1, wobei das ungesättigte Nitril ausgewählt ist aus der Gruppe bestehend aus Acrylnitril, Methacrylnitril, Ethacrylnitril, Phenylacrylnitril, α-Chloracrylnitril und Chloracrylnitril.

6. Chemikalienbeständige Polymerharzzusammensetzung nach Anspruch 1, wobei das aromatische Vinyl ausgewählt ist aus der Gruppe bestehend aus Styrol, α-Methylstyrolvinyltoluol, t-Butylstyrol, halogensubstituiertem Styrol, 1,3-Dimethylstyrol, 2,4-Dimethylstyrol und Ethylstyrol.

7. Chemikalienbeständige Polymerharzzusammensetzung nach Anspruch 1, wobei das Alkylacrylat ausgewählt ist aus der Gruppe bestehend aus Methylacrylat, Ethylacrylat, Propylacrylat und Butylacrylat.

8. Chemikalienbeständige Polymerharzzusammensetzung nach Anspruch 1, wobei das Pfropfcopolymer aus ungesättigtem Nitril und aromatischem Vinyl und Alkylacrylat Acrylnitril-Styrol-Butylacrylat umfasst.

9. Chemikalienbeständige Polymerharzzusammensetzung nach Anspruch 1, ferner umfassend ein oder mehrere Additive, die ausgewählt sind aus der Gruppe bestehend aus einem Verträglichkeitsvermittler auf Basis von ungesättigtem Nitril, aromatischem Vinyl und Glycidylmethacrylat, einem Verträglichkeitsvermittler auf Basis von ungesättigtem Nitril, aromatischem Vinyl und Maleinsäureanhydrid, einem Verträglichkeitsvermittler auf Basis von gesättigtem Ethylen, Alkylacrylat und Glycidylmethacrylat und einem Hydrolyseschutzmittel auf Basis von Carbodiimid.

10. Chemikalienbeständige Polymerharzzusammensetzung nach Anspruch 1, ferner umfassend ein oder mehrere Additive, die ausgewählt sind aus der Gruppe bestehend aus einem Farbstoff, einem Pigment, einem Mittel zur Verbesserung der Schlagzähigkeit, einem Füllstoff, einem Stabilisator, einem Schmiermittel, einem Antioxidationsmittel, einem antimikrobiell wirkenden Mittel, einem Trennmittel für Formen und Mischungen davon.

## Revendications

1. Composition de résine polymère résistante chimique pour console de plafond, la composition comprenant :
20 à 40 % en poids d'une résine polyester comprenant un résidu d'un composant acide dicarboxylique contenant de l'acide téréphtalique et un résidu d'un composant diol contenant 5 à 60 % en moles d'isosorbide, 5 à 80 % en moles de cyclohexanediméthanol %, et une quantité résiduelle d'autres composés diol ;
50 à 70 % en poids d'un polycarbonate ; et
10 à 30 % en poids d'un copolymère de greffe nitrile insaturé-vinyle aromatique-alkylacrylate, sur la base du poids total de la résine polyester, du polycarbonate, et du copolymère de greffe nitrile insaturé-vinyle aromatique-alkylacrylate ; et
0,1 à 10 parties en poids d'un additif résistant aux intempéries, sur la base de 100 % en poids de la résine polyester, du polycarbonate, et du copolymère de greffe nitrile insaturé-vinyle aromatique-alkylacrylate,
dans laquelle l'additif résistant aux intempéries comprend un ou plusieurs choisis dans le groupe constitué par un composé à base de benzotriazole, un composé à base de benzophénone, un composé à base de benzoxazine, un composé à base de malonate, un composé à base de triazine, et un composé à base de stabilisateur de lumière à amine bloquée (HALS).

2. Composition de résine polymère résistante chimique selon la revendication 1 ayant un indice de résistance aux intempéries ΔE de 1,0 ou moins, qui est mesuré en utilisant un testeur d'intempéries accéléré selon la norme ASTM D 4587-05.

3. Composition de résine polymère résistante chimique selon la revendication 1, dans laquelle dans la résine polyester, le composant acide dicarboxylique comprend en outre un ou plusieurs choisis dans le groupe constitué par les acides dicarboxyliques aromatiques ayant 8 à 20 atomes de carbone et les acides dicarboxyliques aliphatiques ayant 4 à 20 atomes de carbone.

4. Composition de résine polymère résistante chimique selon la revendication 1, dans laquelle dans la résine polyester, le composant diol comprend en outre un ou plusieurs choisis dans le groupe constitué par les composés représentés par les formules chimiques 1, 2 et 3 : 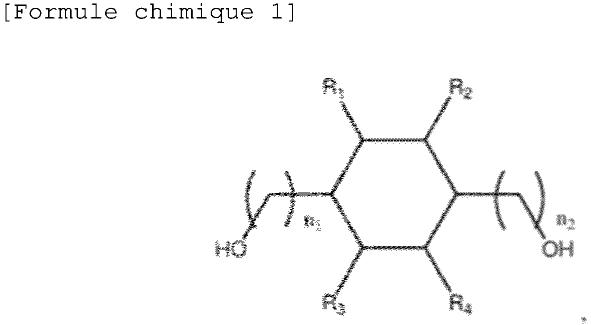
dans laquelle R₁, R₂, R₃ et R₄ sont chacun indépendamment un atome d'hydrogène ou un groupe alkyle substitué ou non substitué ayant 1 à 5 atomes de carbone et n₁ et n₂ sont chacun indépendamment un nombre entier de 0 à 3 ; 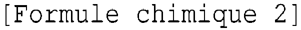 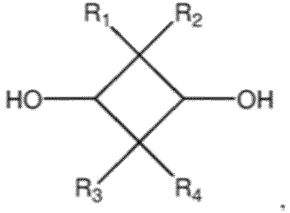
dans laquelle R₁, R₂, R₃ et R₄ sont chacun indépendamment un atome d'hydrogène ou un groupe alkyle substitué ou non substitué ayant de 1 à 5 atomes de carbone ; 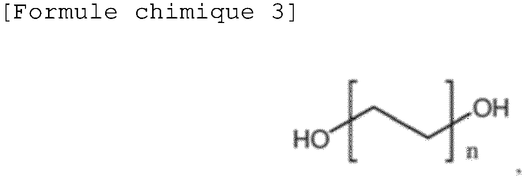
dans laquelle n est un nombre entier de 1 à 7.

5. Composition de résine polymère résistante chimique selon la revendication 1, dans laquelle le nitrile insaturé est choisi dans le groupe constitué par l'acrylonitrile, le méthacrylonitrile, l'éthacrylonitrile, le phénylacrylonitrile, l'α-chloroacrylonitrile, et le chloroacrylonitrile.

6. Composition de résine polymère résistante chimique selon la revendication 1, dans laquelle le vinyle aromatique est choisi dans le groupe constitué par le styrène, l'α-méthyl styrène vinyltoluène, le t-butyl styrène, le styrène substitué par un halogène, le 1,3-diméthyl styrène, le 2,4-diméthyl styrène, et l'éthyl styrène.

7. Composition de résine polymère résistante chimique selon la revendication 1, dans laquelle l'alkylacrylate est choisi dans le groupe constitué paar l'acrylate de méthyle, l'lacrylate d'éthyle, l'acrylate de propyle, et l'acrylate de buyle.

8. Composition de résine polymère résistante chimique selon la revendication 1, dans laquelle le copolymère de greffe nitrile insaturé-vinyle aromatique-alkylacrylate comprend l'acrylonitrile-styrène-acrylate de butyle.

9. Composition de résine polymère résistante chimique selon la revendication 1, comprenant en outre un ou plusieurs additifs choisis dans le groupe constitué par un agent compatibilisant à base de nitrile insaturé-vinyle aromatique-méthacrylate de glycidyle, un agent compatibilisant à base de nitrile insaturé-vinyle aromatique-anhydride maléique, un agent compatibilisant à base d'éthylène saturé-alkylacrylate-méthacrylate de glycidyle, et un agent anti-hydrolyse à base de carbodiimide.

10. Composition de résine polymère résistante chimique selon la revendication 1, comprenant en outre un ou plusieurs additifs choisis dans le groupe constitué par un colorant, un pigment, un modificateur d'impact, une charge, un stabilisateur, un lubrifiant, un antioxydant, un antimicrobien, un agent de libération de moule, et leurs mélanges.
